(19) **Europäisches Patentamt**
**European Patent Office**
**Office européen des brevets**

(11) **EP 2 864 735 B1**

(12) **FASCICULE DE BREVET EUROPEEN**

(45) Date de publication et mention
de la délivrance du brevet:
**24.08.2016 Bulletin 2016/34**

(51) Int Cl.:
*G01D 3/08* (2006.01)     *G01L 9/00* (2006.01)
*G01C 19/56* (2012.01)     *G01L 19/06* (2006.01)
*G01D 3/10* (2006.01)

(21) Numéro de dépôt: **13726731.6**

(22) Date de dépôt: **28.05.2013**

(86) Numéro de dépôt international:
**PCT/EP2013/060955**

(87) Numéro de publication internationale:
**WO 2013/189700 (27.12.2013 Gazette 2013/52)**

(54) **CAPTEUR A ELEMENT VIBRANT DANS UNE CAVITE, A DETECTION INTEGREE D'ANOMALIES**

SENSOR MIT EINEM SCHWINGENDEN ELEMENT IN EINEM HOHLRAUM MIT INTEGRIERTER ANOMALIENERKENNUNG

SENSOR WITH A VIBRATING MEMBER IN A CAVITY, WITH INTEGRATED ANOMALY DETECTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.06.2012 FR 1201771**

(43) Date de publication de la demande:
**29.04.2015 Bulletin 2015/18**

(73) Titulaire: **THALES**
**92400 Courbevoie (FR)**

(72) Inventeurs:
• **QUER, Régis**
**F-07130 Saint Peray (FR)**
• **PLANCHETTE, Yann**
**F-26000 Valence (FR)**
• **MUGUET, Jean-Michel**
**F-26300 Rochefort-Samson (FR)**

(74) Mandataire: **Desvignes, Agnès et al**
**Marks & Clerk France**
**Immeuble Visium**
**22, avenue Aristide Briand**
**94117 Arcueil Cedex (FR)**

(56) Documents cités:
**EP-A1- 0 557 216**     **EP-A2- 0 882 966**
**EP-A2- 1 995 575**     **EP-B1- 1 831 663**
**WO-A1-2004/005858**     **FR-A1- 2 848 298**
**FR-A1- 2 849 183**     **FR-A1- 2 888 318**

• **HERVÉ MATHIAS ET AL: "Architecture for integrated mems resonators quality factor measurement", DTIP OF MEMS & MOEMS : DESIGN, TEST, INTEGRATION AND PACKAGING OF MEMS/MOEMS 2007 : [SYMPOSIUM ON DESIGN, TEST, INTEGRATION AND PACKAGING OF MEMS/MOEMS], EDA PUBL, GRENOBLE, FRANCE; STRESA, LAGO MAGGI , 27 avril 2007 (2007-04-27), pages 1-5, XP008148956, ISBN: 978-2-35500-000-3 Extrait de l'Internet: URL:http://arxiv.org/ftp/arxiv/papers/0802 /0802.3767.pdf [extrait le 2013-04-25] cité dans la demande**

## Description

Le domaine de l'invention est celui des micro-systèmes vibrants, et notamment mais non exclusivement les micro-capteurs, dont le principe de mesure est basé sur la fréquence d'oscillations d'un système mécanique oscillant, à poutre(s) ou membrane(s), formé au moyen de structures électromécaniques micro-usinées dites MEMS placées dans une cavité sous vide.

L'invention s'applique plus particulièrement aux capteurs de précision, tels ceux embarqués dans des aéronefs et utilisés pour le guidage ou l'aide au pilotage, fournissant des indications, de pression, accélération ou vitesse angulaire. Ces capteurs doivent fournir une mesure dont le niveau de précision réelle doit être connu à chaque instant, car ces mesures servent à des fonctions critiques ou essentielles pour la sécurité ou la mission de l'aéronef. Par exemple la mauvaise indication de pression statique conduit à une indication d'altitude erronée. On comprend bien combien il est primordial que le système de gestion de vol et le pilote aient connaissance de cette erreur.

## ETAT DE LA TECHNIQUE

Les micro-capteurs à résonateur(s) vibrant(s) sont des microstructures à base de matériaux tels que le quartz et le silicium, qui utilisent la résonance d'un élément vibrant (ou parfois plusieurs). Le résonateur est typiquement une lame ou une poutre vibrante, enfermée dans une chambre à atmosphère contrôlée, typiquement sous vide.

Ces microstructures sont très appréciées car elles sont obtenues par des procédés de fabrication collectifs utilisant les étapes de fabrication habituelles des circuits intégrés électroniques, et permettent la réalisation de composants très petits et peu coûteux.

Le principe bien connu de la mesure est le suivant : on utilise un mode de résonance particulier du résonateur vibrant, contrôlé par un circuit d'excitation comportant une boucle de contrôle automatique de gain. Une grandeur physique externe appliquée au résonateur vibrant est ainsi convertie en une variation de la fréquence de résonance ou une variation de l'amplitude du mouvement vibratoire. Cette variation de fréquence de résonance ou d'amplitude permet une mesure de la contrainte appliquée.

Sur ce principe sont réalisés des micro-capteurs de pression, des micro-accéléromètres, ou encore des micro-gyromètres comme notamment décrit respectivement dans les demandes de brevet FR0215599, FR9202189 et FR0507144.

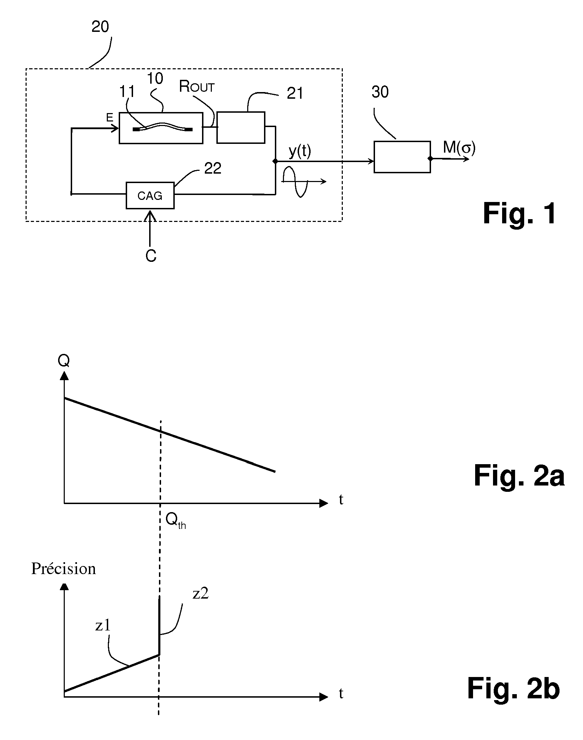

La figure 1 illustre très schématiquement les éléments fonctionnels d'un micro-capteur asservi. Un résonateur 10 à élément(s) vibrant(s) 11 est inclus dans une boucle de circuit électronique fermée 20 à contrôle automatique de gain. La boucle 20 comprend typiquement un circuit de détection de signal 21, et un circuit 22 de contrôle automatique de gain CAG. Le circuit de détection 21 comprend typiquement un amplificateur de signal et un filtre passe-bande, et est caractérisé par un gain $G_d$. Ce circuit de détection 21 détecte un signal électrique, représentatif de l'oscillation du résonateur, par exemple un courant, et fournit en sortie un signal électrique $y(t)$ correspondant, après filtrage et amplification ; ce signal représente le mouvement oscillant du résonateur.

Ce signal électrique $y(t)$ et une consigne d'amplitude externe C peuvent être appliqués en entrées du circuit 22 de contrôle automatique de gain, qui fournit en sortie un signal d'excitation électrique E correspondant, appliqué au résonateur. Le circuit 22 et la consigne C sont conçus pour faire osciller l'élément vibrant (ou les éléments vibrants) du résonateur avec une amplitude d'oscillation prédéterminée $A_0$.

En l'absence de toute contrainte, par exemple sous pression extérieure nulle pour un capteur de pression, ou en cas d'accélération nulle pour un accéléromètre, l'élément vibrant oscille à une fréquence de résonance $Fp_0$ au repos. En présence d'une contrainte de valeur σ, la fréquence de résonance va varier et prendre une valeur Fp. C'est la différence de fréquence $Fp-Fp_0$ qui est la base de la mesure. La mesure est en pratique fournie par un dispositif de traitement de signal 30, généralement un système de traitement numérique qui échantillonne le signal $y(t)$ et qui l'analyse par toutes techniques connues pour déterminer la fréquence Fp et fournir la mesure M correspondante de la contrainte physique recherchée (pression, accélération, vitesse angulaire), à partir de la variation entre la fréquence Fp mesurée, et la fréquence de résonance $Fp_0$ sans contrainte. Cette variation de fréquence est ainsi une image de la contrainte appliquée.

Pour les domaines d'application indiqués plus haut, les capteurs doivent être très performants en termes de sensibilité, précision et facteur d'échelle. La garantie de la précision de la mesure d'un micro-capteur est étroitement liée au maintien du vide dans le capteur. En effet, le résonateur du capteur doit avoir un facteur de qualité de la résonance très élevé, de l'ordre de quelques dizaines de milliers ($10^4$) à plusieurs millions ($10^6$), mais une détérioration du vide se traduit par une détérioration du facteur de qualité, et cette détérioration du facteur de qualité se traduit d'abord par une détérioration du rapport signal sur bruit et finalement par une perte de précision de la mesure.

En conditions opérationnelles, la structure des micro-capteurs peut se dégrader. Notamment une perte partielle de vide dans le capteur peut se produire, induisant une perte de précision sur la mesure, que l'utilisateur n'a aucun moyen de détecter. Ceci est un inconvénient majeur de ces micro-capteurs. Dans des domaines tel celui de l'avionique, il est en effet primordial de savoir à tout moment si la mesure fournie est fiable ou pas.

Par exemple, pour un capteur de pression embarqué dans un aéronef, on pourrait envisager de contrôler la mesure du capteur par d'autres sources telles que les données d'inertie, les données de positionnement GPS, les données de hauteur radio-altimétrique. Mais ces sources ont une disponibilité limitée ou une précision insuffisante, et de plus elles ne représentent qu'indirectement la mesure que l'on cherche à contrôler.

Selon les règles de l'art, on peut mettre en place un contrôle par redondance avec un deuxième capteur semblable au premier, qui a peu de chances de tomber en panne en même temps que le premier ; mais en cas de discordance, il faut alors un troisième capteur pour déterminer quel est le capteur en panne.

Enfin, ces solutions ne donnent pas de diagnostic de panne ni de pronostic de dégradation.

On souhaite de manière générale être en mesure de pouvoir surveiller en cours de fonctionnement, les performances d'un micro-capteur et détecter le fait que la mesure sort d'une tolérance acceptable.

Dans l'invention, on cherche à permettre la détection d'une sortie de tolérance au plus près d'un seuil acceptable, et idéalement à anticiper sur une sortie de tolérance, par des moyens d'auto-test, c'est-à-dire des moyens qui ne reposent pas sur la présence d'autres appareils extérieurs au capteur. L'invention s'inscrit donc dans un contexte de recherche d'auto-testabilité intégrée de ces capteurs, basée sur la surveillance de plusieurs paramètres internes, en lien avec des caractéristiques du capteur. Il s'agit aussi de proposer des fonctions d'auto-test intégrées, à coûts d'intégration limités et sans impact sur le fonctionnement opérationnel du capteur et notamment, sans perte temporaire de la mesure en sortie du capteur.

L'amélioration de la détectabilité d'une dégradation d'un capteur déjà réelle ou proche des limites de tolérance, passe par la définition de différents paramètres, disponibles en sortie du capteur, dont l'exploitation de manière combinée ou non, permet d'améliorer le suivi du capteur.

Dans ce contexte, la présente invention a pour objet une nouvelle source d'information pour la surveillance d'un capteur à résonateur vibrant, dans le but de détecter voire d'anticiper un problème de santé du capteur, et plus spécialement une perte partielle de vide, c'est-à-dire une augmentation de la pression résiduelle suffisamment significative pour induire une erreur de mesure.

Les capteurs à élément(s) vibrant(s), ont en commun d'intégrer des moyens pour mesurer la fréquence de vibration de l'élément vibrant (ou de chacun des éléments vibrants) du capteur, cette fréquence représentant la mesure recherchée.

Dans l'invention, on montre qu'une dégradation du vide interne, c'est-à-dire une augmentation de la pression dans la chambre contenant l'élément vibrant, peut avoir un effet direct sur le calcul de la fréquence de vibration de cet élément, et donc sur la précision de la mesure en sortie.

RESUME DE L'INVENTION

Pour résoudre ce problème, on définit un paramètre de continuité représentatif de la continuité de la mesure de fréquence d'un élément vibrant, en régime stabilisé.

Ce paramètre a différents avantages : il est simple à extraire car il utilise des signaux disponibles dans le circuit de mesure de fréquence ; la surveillance de ce paramètre dans un capteur est également simple à mettre en oeuvre, typiquement par ajout de quelques lignes de code dans les programmes de calcul qui établissent les résultats de mesure ; cette surveillance permet non seulement de détecter une perte de vide, mais de le faire très tôt, en anticipant le moment où elle sera rédhibitoire ; enfin elle peut permettre aussi une quantification de la perte de vide constatée.

Dans un système d'autosurveillance intégré de tels capteurs, un tel paramètre apporte ainsi des informations précieuses à elles seules, et qui complètent les autres informations obtenues par exemple à partir de la surveillance du facteur de qualité du résonateur (cf "Architecture for integral mems resonators quality factor measurement" Hervé Mathias et al - ISBN 978-2-35500-000-3 - Symposium DTIP des 25-27 avril 2007) ou du gain de la boucle de contrôle automatique de gain (EP1831663).

Par conséquent, l'invention propose un capteur de mesure à résonateur, comportant

- un résonateur à élément vibrant placé dans un circuit oscillant contrôlé par une boucle d'asservissement, le circuit oscillant fournissant un signal d'oscillation à une fréquence de résonance Fp représentant la mesure d'une grandeur physique (telle que la pression, l'accélération, etc.),
- et un circuit de calcul de cette fréquence de résonance,

le circuit de calcul comprenant des moyens de mise en forme du signal d'oscillation pour produire un signal en créneaux à la fréquence de résonance, des moyens pour produire périodiquement une fenêtre temporelle de comptage, au moins un compteur incrémenté par le signal en créneaux à la fréquence de résonance pendant la fenêtre temporelle de comptage, et des moyens de calcul de la fréquence de résonance à partir du contenu du compteur,

le capteur étant caractérisé en ce qu'il comprend des moyens pour calculer un paramètre de continuité Pc représentant les variations du résultat du calcul de la fréquence de résonance au cours des fenêtres temporelles successives, et des moyens pour comparer le paramètre Pc à un seuil pour en déduire une information sur la dégradation de la précision du capteur.

De préférence, le circuit de mesure comporte un premier compteur recevant le signal en créneaux à la fréquence de résonance et comptant un nombre N de périodes de la fréquence de résonance Fp pendant la durée Tc de la fenêtre, un deuxième compteur recevant un signal à fréquence d'horloge $F_{hor}$ plus élevée que la fréquence de résonance et comptant le nombre n de périodes d'horloge pendant les N périodes de la fréquence de résonance, la fréquence de résonance Fp calculée étant égale à la fréquence d'horloge multipliée par le rapport N/n.

Le seuil par rapport auquel on compare le paramètre de continuité est de préférence égal ou inférieur à $F_{hor}/n$, le dépassement de ce seuil indiquant une anomalie de fonctionnement.

L'invention est tout particulièrement applicable aux capteurs dont l'élément vibrant est placé dans une cavité sous vide poussé.

On peut ainsi assurer une surveillance en temps réel de la qualité du vide dans le capteur, d'une manière simple, utilisant les signaux naturellement disponibles du capteur et les moyens de traitement de signaux et de calcul naturellement prévus dans le capteur, en sorte que l'on dispose en temps réel à la fois de la mesure du capteur et d'une mesure qui renseigne sur la fiabilité de cette mesure, sans perturbation du fonctionnement du capteur et au prix de seulement quelques lignes de code supplémentaires.

D'autres caractéristiques et avantages de l'invention sont détaillés dans la description détaillée suivante et l'invention est illustrée sur les dessins dans lesquels :

- la figure 1 déjà décrite est un schéma explicatif simplifié d'un micro-capteur de mesure à résonateur à éléments vibrant, avec contrôle d'excitation par boucle de contrôle automatique de gain;
- la figure 2b illustre la dégradation de la précision de mesure d'un micro-capteur à résonateur à élément vibrant lorsque le facteur de qualité diminue (exemple d'une dérive linéaire avec le temps en figure 2a);
- la figure 3 représente un schéma de structure générale d'un transducteur de capteur de pression à poutre résonante, micro-usiné en silicium ;
- la figure 4 représente un schéma électrique de la boucle d'asservissement servant à entretenir une excitation électrique à la fréquence de résonance de la poutre vibrante ;
- la figure 5 représente la mise en forme d'un signal analogique à fréquence de résonance par un circuit à trigger de Schmitt ;
- la figure 6 représente le principe du comptage double pendant une fenêtre temporelle, permettant le calcul de la fréquence de résonance ;
- la figure 7 représente une mise en forme du signal à fréquence de résonance en présence d'un bruit susceptible d'engendrer des fronts de transition indésirables ;
- la figure 8 représente le comptage qui résulte de la situation de la figure 7 ;
- la figure 9 représente l'évolution dans le temps du

paramètre de continuité $Pc_i$ calculé selon l'invention, avec illustration d'anomalies de continuité.

DESCRIPTION DETAILLEE

On va décrire le dispositif d'auto-test à propos d'un capteur de pression MEMS dont le transducteur est micro-usiné à partir de plaques de silicium. Ce cas est facilement transposable à un capteur d'accélération ou de rotation.

Le capteur de pression illustratif de l'invention est un capteur à résonateur à poutre vibrante. C'est une poutre placée dans une cavité sous vide fermée par une membrane fine qui subit la pression atmosphérique extérieure, laquelle constitue la grandeur physique PR à mesurer. La poutre est reliée d'un côté à la membrane et est de ce fait soumise à une tension axiale du fait de la déformation de la membrane en présence d'une pression. La tension de la poutre dépend donc de la pression à mesurer.

La fréquence de résonance dépend de la tension mécanique axiale - autrement dit la force ou contrainte selon l'axe - de la poutre. Si on appelle $\sigma$ la contrainte axiale exercée sur la poutre, $Fp_0$ la fréquence de résonance au repos, et $\sigma_c$ la contrainte critique de flambage de la poutre, on peut considérer que la fréquence de résonance Fp en présence de la contrainte axiale s est donnée par la relation :

$$Fp = Fp_0(1+\sigma/\sigma_c)^{1/2}$$

On va mesurer la fréquence de résonance Fp et la théorie permet de remonter à la contrainte axiale $\sigma$ et par suite à la pression atmosphérique PR qui engendre cette contrainte.

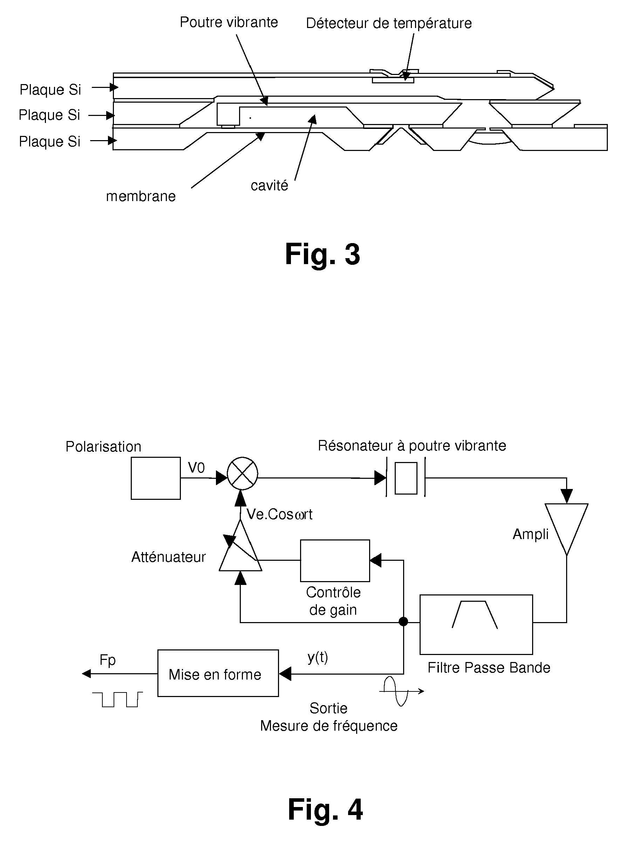

Un tel capteur, ou plus exactement la partie "transducteur" de ce capteur, est schématisé sur la figure 3. Le reste du capteur, c'est-à-dire l'électronique qui excite l'oscillation de la poutre vibrante et qui traite les signaux de sortie du transducteur, est formé sur une carte électronique sur laquelle le transducteur est reporté, le plus souvent sous forme d'une cellule, c'est à dire d'un boitier de petites dimensions qui contient le transducteur. On appelle également « élément sensible » ou « détecteur » le transducteur en silicium micro-usiné. Cette carte n'est pas représentée.

Un tel capteur est par exemple décrit dans les dans les demandes de brevet européennes Nos EP0557216 et EP1995575.

En pratique, la vibration de la poutre est entretenue par des forces électrostatiques produites par un signal électrique oscillant dont la fréquence s'asservit automatiquement à la fréquence de résonance de la poutre, et on mesure cette fréquence d'oscillation électrique. Une boucle d'asservissement représentée à la figure 4 permet d'entretenir la vibration à cette fréquence. Cette boucle comprend l'application d'une tension de polarisation continue V0 à une électrode d'excitation en couplage capacitif avec la poutre ; à cette tension V0 vient se superposer la tension alternative d'amplitude Ve résultant de l'oscillation à la fréquence de résonance. La boucle peut comprendre un amplificateur en sortie du résonateur, un filtre passe-bande, un dispositif de contrôle de gain, un atténuateur recevant la sortie du filtre passe-bande et commandé par le circuit de contrôle de gain. C'est de cette boucle qu'on sort un signal à la fréquence de résonance, soit à la sortie du filtre passe-bande, soit à a sortie de l'atténuateur.

On mesure la fréquence Fp de ce signal de sortie, qui est la fréquence de résonance de la poutre, et c'est cette mesure qui va servir au calcul de la pression.

La mesure de fréquence se fait de préférence par une méthode de comptage de fronts de montée ou descente de signaux carrés. En particulier on peut compter le nombre de périodes du signal à fréquence de résonance Fp pendant une durée fixe connue Tc. On peut en déduire directement une fréquence Fp si on connaît précisément la valeur de Tc.

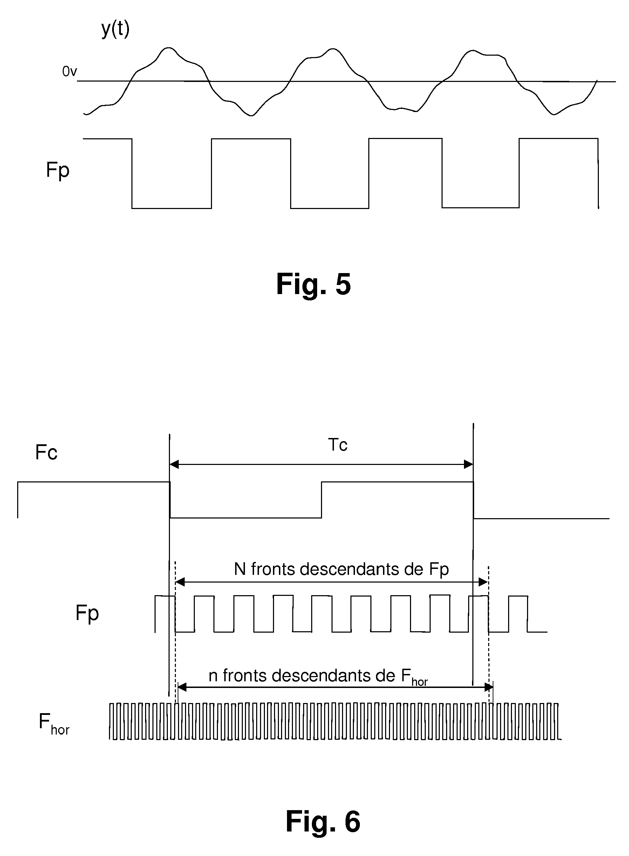

Toutefois, la méthode de comptage préférentielle est une méthode de comptage double qui est expliquée en référence aux figures 5 et 6 et qui comprend les opérations suivantes.

Tout d'abord, le signal y(t) à fréquence de résonance issu de la boucle d'asservissement est transformé en signal carré dont les fronts de montée et descente coïncident avec les passages par zéro du signal (figure 5). Cette opération est classique et utilise par exemple un circuit dit "trigger de Schmitt" qui détecte les passages par zéro avec un seuil de basculement défini de manière à éviter des commutations intempestives en présence de bruit en fonctionnement nominal.

Ce circuit produit un signal en créneaux à la fréquence de résonance Fp.

Ensuite, on établit un signal à fréquence relativement basse Fc, par exemple une trentaine de hertz, dont la période Tc (typiquement environ 30 ms) définit une fenêtre temporelle de comptage pendant laquelle on va compter les périodes de la fréquence de résonance Fp. On pourrait utiliser par exemple un compteur dont le comptage est alternativement autorisé puis interrompu par les fronts descendants de la fréquence basse Fc. Le compteur posséderait alors une entrée de comptage pour recevoir les créneaux à la fréquence de résonance Fp et pour s'incrémenter à chaque front descendant de cette fréquence Fp. Le contenu N du compteur représenterait alors le nombre de périodes de la fréquence Fp et permettrait donc de calculer cette fréquence dès lors que la durée Tc est connue.

On préfère cependant opérer d'une manière plus fine en utilisant deux compteurs qui sont activés pendant la durée Tc et qui s'incrémentent

- pour le premier compteur à partir des fronts de la fréquence de résonance Fp,

- pour le deuxième compteur à partir des fronts d'un signal d'horloge à fréquence $F_{hor}$ beaucoup plus élevée que la fréquence de résonance (au moins 100 fois plus élevée).

Ainsi, comme l'illustre la figure 6, le premier compteur s'incrémente à partir du premier front de descente du signal en créneaux à fréquence Fp postérieur au front descendant du signal à fréquence Fc ; le comptage s'interrompt au moment du premier front descendant du signal Fp postérieur au front descendant du signal à fréquence Fc. Le contenu N du premier compteur représente globalement un nombre de fronts descendants du signal à fréquence de résonance pendant une fenêtre de comptage de durée Tc = 1/Fc.

Un deuxième compteur s'incrémente à partir du premier front descendant du signal d'horloge qui suit le début d'incrémentation du premier compteur ; il s'interrompt au moment du premier front descendant du signal d'horloge qui suit l'arrêt du comptage du premier compteur. Le contenu n du deuxième compteur représente globalement un nombre de fronts descendants du signal d'horloge $F_{hor}$ pendant la fenêtre de comptage.

La fréquence de résonance Fp peut être considérée comme étant égale à la fréquence d'horloge multipliée par le rapport N/n.

$$Fp = N.F_{hor}/n$$

Cette solution à deux compteurs permet notamment de s'affranchir des incertitudes sur la valeur de la durée de la fenêtre Tc et de se reposer plutôt sur la valeur mieux maîtrisée de la fréquence d'horloge.

L'incertitude sur le calcul de Fp est

$$\Delta Fp/Fp = \Delta N/N + \Delta F_{hor}/F_{hor} + \Delta n/n$$

On peut considérer que l'incertitude sur le comptage de n est égale au rapport entre la durée Tc et la durée d'une période d'horloge, c'est-à-dire qu'on peut compter à une unité près le nombre de fronts descendants d'horloge.

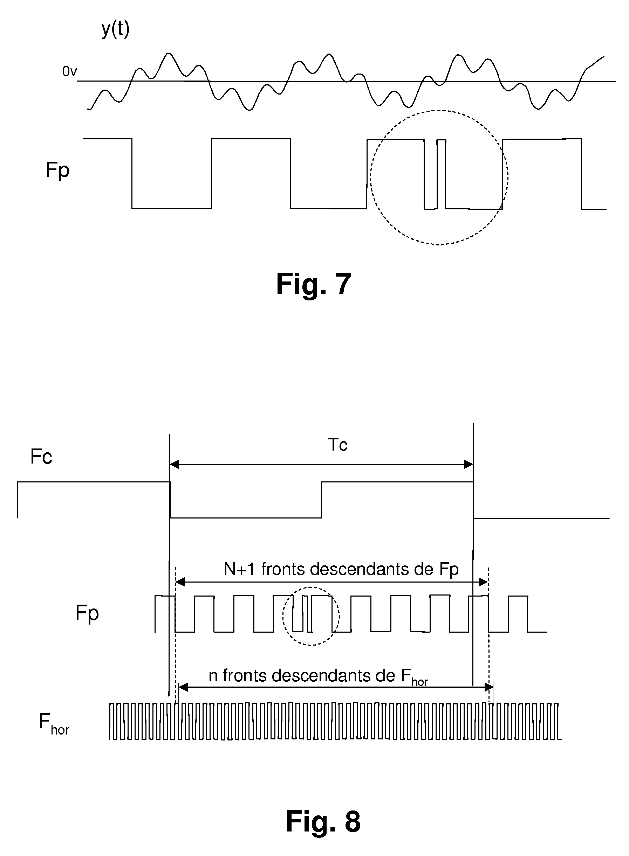

Les figures 7 et 8 représentent ce qui se passe lorsque le signal à fréquence de résonance est affecté d'une anomalie susceptible de fausser la mesure. L'exemple qui est donné est le suivant : le signal de mesure à la fréquence de résonance Fp est affecté d'un bruit en tension sinusoïdal qui se superpose au signal résultant de la résonance. Si l'amplitude des variations de tension dues au bruit sinusoïdal superposé est telle que le trigger de Schmitt bascule intempestivement (parce que le signal passe au-dessous de zéro ou d'un seuil bas à un moment où il ne devrait pas), on va fausser le nombre de fronts descendants de la fréquence Fp transformée en signal carré.

Le front intempestif est compté par le premier compteur comme on le voit sur la figure 8 (N+ 1 fronts au lieu d'un nombre théorique N). Il en résulte une erreur d'une unité dans le contenu du premier compteur. Cette erreur d'une unité représente une erreur de fréquence égale à $F_{hor}/n$. Sur cet exemple, un seul front intempestif est illustré mais l'erreur dans la réalité pourrait être de plusieurs unités.

On considère selon l'invention un paramètre de continuité Pc qui représente les variations anormales de la fréquence Fp, c'est-à-dire des variations qui ne devraient pas se produire compte-tenu du fait que la grandeur mesurée par le capteur (pression ou accélération par exemple) ne subit que des variations lentes sans sauts de valeur.

Le paramètre de continuité préféré est la différence entre deux valeurs successives de Fp obtenues par une méthode de comptage d'impulsions telle que celle qui vient d'être décrite.

Le paramètre PC, affecté d'un indice i, soit $Pc_i$, peut s'exprimer comme :

$Pc_i = Fp_i - Fp_{i-1}$, où i est un indice représentant le rang de la fenêtre de comptage de durée Tc dans une succession de fenêtres temporelles de comptages, $Fp_i$ est la mesure obtenue par comptage pendant la fenêtre de rang i, et $Fp_{i-1}$ est la mesure de fréquence obtenue pendant la fenêtre précédente de rang i-1.

Le paramètre est de préférence calculé à chaque fenêtre de comptage. Il est donc fourni avec une fréquence Fc = 1/Tc.

Selon l'invention, on surveille le paramètre $Pc_i$ et on détecte le dépassement d'un seuil de tolérance pour ce paramètre. Le seuil de tolérance est de préférence égal à $F_{hor}/n$. Pour détecter cette sortie de tolérance (correspondant à une unité de comptage des périodes de Fp pendant une fenêtre de durée Tc, donc une unité d'erreur sur N), on utilise un comparateur qui compare $Pc_i$ à un seuil de référence. Ce dernier seuil peut être par exemple égal à $F_{hor}/2n$ pour bien discriminer la présence d'un saut de valeur $F_{hor}/n$. Il peut aussi être compris entre $F_{hor}/2n$ et $F_{hor}/n$.

La comparaison à ce seuil est significative dans la mesure où les fluctuations naturelles de la fréquence Fp durant la fenêtre de comptage sont très inférieures à la valeur $F_{hor}/n$. Par "variations naturelles", on entend le bruit naturel du signal produit par la boucle de résonance et les fluctuations naturelles de Fp en fonction des conditions d'environnement.

Les ordres de grandeur peuvent être les suivants :

$F_{hor}$ égal 20 MHz
$T_c$ = 30 ms
$F_p$ peut être de 30 à 70 kHz

la variation de fréquence en fonction de la pression qu'on chercher à mesurer (capteur de pression) peut être d'environ 6 à 10 Hz par hectopascal (hPa).

Le nombre N mesuré peut être de quelques centaines à quelques milliers ; le nombre n est de plusieurs centaines de milliers.

Une erreur d'une unité de comptage peut correspondre à plusieurs hectopascals, par exemple environ 4 hPa ; elle est très supérieure aux variations naturelles de la pression à laquelle est soumise le capteur embarqué dans un aéronef :

- les variations de pression dans l'environnement de l'aéronef ne dépassent pas 200 hPa par minute soit 0,1 hPa sur une durée Tc= 30 ms ;
- les variations de température (qui interviennent dans les calculs fournissant la pression à partir de la fréquence de résonance) ne dépassent pas 5° par minute, ce qui se traduit par une fluctuation de Fp très inférieure à 1 hPa sur la durée Tc = 30ms ;
- l'incertitude d'une unité sur le comptage n vaut 1/n, ce qui est très inférieur à 1/N ;
- enfin l'incertitude sur la numérisation (1LSB) représente plusieurs centaines de fois moins que l'erreur due à un dépassement de valeur du paramètre de continuité.

Par conséquent le contrôle du paramètre de continuité peut s'avérer être une indication précieuse d'une anomalie intrinsèque grave de fonctionnement du capteur.

Lors d'une perte de vide de la cavité contenant le résonateur, l'amplitude crête du signal à fréquence de résonance diminue. Mais le bruit électronique ne diminue pas car il est intrinsèque à la chaîne de détection du signal. Le rapport signal/bruit est donc dégradé. Le signal est ensuite mis en forme par un circuit à trigger de Schmitt, dont les seuils de basculement en montée et en descente sont réglés par deux résistances. La différence de valeur (hystérésis) entre ces deux seuils peut être réglée ; et on peut déterminer à partir de quelle valeur de rapport signal/bruit des commutations intempestives, telles qu'expliquées en référence à la figure 7, peuvent se produire et affecter le comptage.

Des mesures ont été faites sur un capteur de pression en faisant varier la pression interne de la cavité pour simuler une perte de vide. On a constaté que jusqu'à une pression interne de 0,1 hPa on ne détectait pas d'anomalie du paramètre de continuité. Pour une pression de 0,11 hPa on a détecté deux anomalies de comptage.

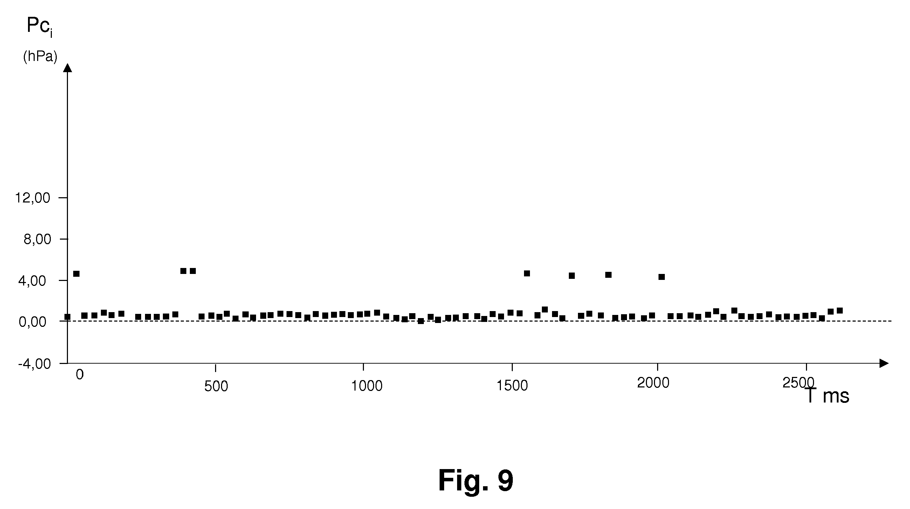

Pour une pression de 0,12 hPa on a détecté sept anomalies ; ces anomalies sont représentées sur la courbe de la figure 9 : cette courbe porte en abscisse le temps en millisecondes, et en ordonnée le paramètre de continuité (exprimé ici directement en hectopascals plutôt qu'en fréquence de résonance) ; le paramètre de con-

tinuité $Pc_i$ est représenté par des points répartis toutes les 30 millisecondes, l'hypothèse étant que Tc = 30 ms.

Cette courbe montre bien que la détection du paramètre de continuité est une source d'information importante sur la santé du capteur, et en particulier sur la perte de vide de la cavité qui affecte la santé du capteur puisque des anomalies détectables par ce paramètre de continuité $Pc_i = Fp_i-Fp_{i-1}$ peuvent justement être dues à une perte de vide dans la cavité, perte de vide dont on sait par ailleurs qu'elle influence la précision de la mesure.

## Revendications

1. Capteur de mesure à résonateur, comportant

   - un résonateur (10) à élément vibrant placé dans un circuit oscillant contrôlé par une boucle d'asservissement, le circuit oscillant fournissant un signal d'oscillation y(t) à une fréquence de résonance Fp représentant la mesure d'une grandeur physique,
   - et un circuit de calcul de cette fréquence de résonance,

   le circuit de calcul comprenant des moyens de mise en forme du signal d'oscillation pour produire un signal en créneaux à la fréquence de résonance Fp, des moyens pour produire périodiquement une fenêtre temporelle de comptage, au moins un compteur incrémenté par le signal en créneaux à la fréquence de résonance pendant la fenêtre temporelle de comptage, et des moyens de calcul de la fréquence de résonance à partir du contenu du compteur, le capteur étant **caractérisé en ce qu'**il comprend en outre des moyens pour calculer un paramètre de continuité Pc représentant les variations du résultat du calcul de la fréquence de résonance au cours des fenêtres temporelles successives, et des moyens pour comparer le paramètre Pc à un seuil pour en déduire une information sur la dégradation de la précision du capteur.

2. Capteur selon la revendication 1, **caractérisé en ce que** le circuit de calcul comporte un premier compteur recevant le signal en créneaux à la fréquence de résonance et comptant un nombre N de périodes de la fréquence de résonance Fp pendant la durée Tc de la fenêtre, un deuxième compteur recevant un signal à fréquence d'horloge $F_{hor}$ plus élevée que la fréquence de résonance et comptant un nombre n de périodes d'horloge pendant les N périodes de la fréquence de résonance, la fréquence de résonance Fp calculée étant égale à la fréquence d'horloge multipliée par le rapport N/n.

3. Capteur selon l'une des revendications 1 et 2, **ca-**

**ractérisé en ce que** le paramètre de continuité est calculé périodiquement à la fréquence de la fenêtre temporelle de comptage, et sa valeur $PC_i$ pour une fenêtre de rang i est égale à $Fp_i -Fp_{i-1}$, où $Fp_i$ est la fréquence de résonance calculée à partir de la fenêtre de comptage de rang i et $Fp_{i-1}$ est la fréquence de résonance calculée à partir de la fenêtre de comptage de rang précédent i-1.

4. Capteur selon l'une des revendications 1 à 3, **caractérisé en ce que** le seuil par rapport auquel on compare le paramètre de continuité est égal à $F_{hor}/2n$ ou compris entre $F_{hor}/2n$ et $F_{hor}/n$.

5. Capteur selon l'une des revendications 1 à 4, **caractérisé en ce que** l'élément vibrant est placé dans une cavité sous vide poussé, la détection d'un dépassement du seuil étant une indication probable d'une perte de vide.

## Patentansprüche

1. Messsensor mit Resonator, der Folgendes umfasst:

   - einen Resonator (10) mit einem schwingenden Element, das sich in einer Oszillationsschaltung befindet, die durch eine Regelschleife gesteuert wird, wobei die Oszillationsschaltung ein Oszillationssignal y(t) mit einer Resonanzfrequenz Fp liefert, die das Maß einer physikalischen Größe repräsentiert,
   - und eine Schaltung zum Berechnen dieser Resonanzfrequenz,

   wobei die Rechenschaltung Folgendes umfasst: Mittel zum Formen des Oszillationssignals, um ein Rechteckwellensignal mit der Resonanzfrequenz Fp zu erzeugen, Mittel zum periodischen Erzeugen eines Zählzeitfensters, wenigstens einen Zähler, der von dem Rechteckwellensignal mit der Resonanzfrequenz während des Zählzeitfensters inkrementiert wird, und Mittel zum Berechnen der Resonanzfrequenz auf der Basis des Inhalts des Zählers, wobei der Sensor **dadurch gekennzeichnet ist, dass** er ferner Mittel zum Berechnen eines Kontinuitätsparameters Pc, der die Variationen des Ergebnisses der Berechnung der Resonanzfrequenz im Laufe von aufeinander folgenden Zeitfenstern repräsentiert, und Mittel zum Vergleichen des Parameters Pc mit einer Schwelle umfasst, um davon eine Information über den Rückgang der Präzision des Sensors abzuleiten.

2. Sensor nach Anspruch 1, **dadurch gekennzeichnet, dass** die Rechenschaltung Folgendes umfasst: einen ersten Zähler, der das Rechteckwellensignal mit der Resonanzfrequenz empfängt und eine Anzahl N von Perioden der Resonanzfrequenz Fp während der Dauer Tc des Fensters zählt, einen zweiten Zähler, der ein Taktfrequenzsignal $F_{hor}$ empfängt, das höher ist als die Resonanzfrequenz, und eine Anzahl n von Taktperioden während der N Perioden der Resonanzfrequenz zählt, wobei die berechnete Resonanzfrequenz Fp gleich der Taktfrequenz multipliziert mit dem Verhältnis N/n ist.

**3.** Sensor nach einem der Ansprüche 1 und 2, **dadurch gekennzeichnet, dass** der Kontinuitätsparameter periodisch mit der Frequenz des Zählzeitfensters berechnet wird und sein Wert $PC_i$ für ein Fenster von Rang i gleich $Fp_i$-$Fp_{i-1}$ ist, wobei $Fp_i$ die Resonanzfrequenz ist, die auf der Basis des Zählfensters von Rang i berechnet wird, und $Fp_{i-1}$ die Resonanzfrequenz ist, die auf der Basis des Zählfensters des vorherigen Rangs i-1 berechnet wird.

**4.** Sensor nach einem der Ansprüche 1 bis 3, **dadurch gekennzeichnet, dass** die Schwelle, mit Bezug auf die der Kontinuitätsparameter verglichen wird, gleich $F_{hor}$/2n ist oder zwischen $F_{hor}$/2n und $F_{hor}$/n liegt.

**5.** Sensor nach einem der Ansprüche 1 bis 4, **dadurch gekennzeichnet, dass** das schwingende Element in einem hochevakuierten Hohlraum platziert ist, wobei die Erkennung einer Überschreitung der Schwelle eine Anzeige für einen möglichen Vakuumverlust ist.

**Claims**

**1.** A resonator measurement sensor, comprising

- a resonator (10) with a vibrating element placed in an oscillating circuit controlled by a closed-loop control, the oscillating circuit supplying an oscillating signal y(t) at a resonance frequency Fp representing the measurement of a physical quantity,
- and a processing circuit for calculating this resonance frequency,

the processing circuit comprising means for conditioning the oscillating signal so as to produce a square-wave signal at the resonance frequency Fp, means for periodically producing a counting time window, at least one counter incremented by the square-wave signal at the resonance frequency during the counting time window, and means for calculating the resonance frequency from the content of the counter, the sensor being **characterized in that** it furthermore comprises means for calculating a continuity parameter Pc representing the variations in the result of the calculation of the resonance frequency over the course of successive time windows, and means for comparing the parameter Pc with a threshold in order to deduce from this information on the degradation in the precision of the sensor.

**2.** The sensor as claimed in claim 1, **characterized in that** the processing circuit comprises a first counter receiving the square-wave signal at the resonance frequency and counting a number N of periods of the resonance frequency Fp over the duration Tc of the window, a second counter receiving a signal at a clock frequency $F_{hor}$ higher than the resonance frequency and counting a number n of clock periods over the N periods of the resonance frequency, the resonance frequency Fp calculated being equal to the clock frequency multiplied by the ratio N/n.

**3.** The sensor as claimed in either of claims 1 and 2, **characterized in that** the continuity parameter is calculated periodically at the frequency of the counting time window, and its value $PC_i$ for a window of rank i is equal to $Fp_i$-$F_{Pi-1}$, where $Fp_i$ is the resonance frequency calculated from the counting window of rank i and $Fp_{i-1}$ is the resonance frequency calculated from the preceding counting window of rank i-1.

**4.** The sensor as claimed in one of claims 1 to 3, **characterized in that** the threshold with respect to which the continuity parameter is compared is equal to $F_{hor}$/2n or in the range between $F_{hor}$/2n and $F_{hor}$/n.

**5.** The sensor as claimed in one of claims 1 to 4, **characterized in that** the vibrating element is placed in a cavity under a high vacuum, the detection of the exceeding of the threshold being a probable indication of a loss of vacuum.

**Fig. 1**

**Fig. 2a**

**Fig. 2b**

Poutre vibrante    Détecteur de température

Plaque Si →

Plaque Si →

Plaque Si →

membrane    cavité

# Fig. 3

Polarisation                    Résonateur à poutre vibrante

V0

Ve.Cosωrt

Ampli

Atténuateur

Contrôle
de gain

Filtre Passe Bande

Fp                          y(t)

Mise en forme

Sortie
Mesure de fréquence

# Fig. 4

y(t)

0v

Fp

**Fig. 5**

Fc

Tc

N fronts descendants de Fp

Fp

n fronts descendants de $F_{hor}$

$F_{hor}$

**Fig. 6**

y(t)

0v

Fp

**Fig. 7**

Fc

Tc

N+1 fronts descendants de Fp

Fp

n fronts descendants de $F_{hor}$

$F_{hor}$

**Fig. 8**

Fig. 9

EP 2 864 735 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0215599
- FR 9202189
- FR 0507144
- EP 1831663 A
- EP 0557216 A
- EP 1995575 A

**Littérature non-brevet citée dans la description**

- **HERVÉ MATHIAS et al.** Architecture for integral mems resonators quality factor measurement. *Symposium DTIP,* 25 Avril 2007, ISBN 978-2-35500-000-3